# EUROPÄISCHE PATENTSCHRIFT

(11) **EP 1 194 709 B1**
(45) Veröffentlichungstag und Bekanntmachung des Hinweises auf die Patenterteilung: **02.04.2003**
(21) Anmeldenummer: 00949082.2
(22) Anmeldetag: 20.06.2000
(51) Int. Cl.: F16H 37/08

(54) **REIBRAD-UMLAUFGETRIEBE MIT KEGELRÄDERN**
FRICTION-WHEEL PLANETARY GEAR WITH BEVEL GEARS
ENGRENAGE PLANETAIRE A FRICTION A ROUES CONIQUES

(30) Priorität: 26.06.1999 DE 19929424
(43) Veröffentlichungstag der Anmeldung: 10.04.2002
(73) Patentinhaber: ROBERT BOSCH GMBH, 70442 Stuttgart (DE)
(72) Erfinder: SIEBER, Udo, D-74321 Bietigheim (DE)
(86) Internationale Anmeldenummer: DE0001916
(87) Internationale Veröffentlichungsnummer: WO01001018

(56) Entgegenhaltungen:
- EP-A- 0 003 887
- DE-A- 19 644 133
- GB-A- 459 001
- US-A- 4 322 798

## Beschreibung

### Stand der Technik

Die Erfindung geht aus von einem Reibrad-Umlaufgetriebe mit Kegelrädern nach der Gattung des Anspruchs 1. Ein derartiges beispielsweise aus der DE 196 44 133 A1 bekanntes Reibrad-Umlaufgetriebe weist Kegelräder auf, die an einem Reibrad abrollen, wobei die Anpreßkraft zwischen den Kegelrädern und dem Reibrad veränderlich ist. Zur Veränderung der Anpreßkraft wird vorgeschlagen, einen drehzahl- bzw. momentenabhängigen Regler vorzusehen. D.h., einer bestimmten Drehzahl bzw. einem bestimmten Drehmoment wird dabei eine entsprechende Anpreßkraft zugeordnet. Damit kein Schlupf entsteht, muß die Anpreßkraft höher eingestellt werden als unbedingt erforderlich. Dies hat jedoch einen erhöhten Verschleiß an den Kegelrädern und/oder dem Reibrad zur Folge. Nimmt man hingegen einen gewissen Schlupf in Kauf, so hat dies erhöhte Leistungsverluste bzw. einen schlechteren Wirkungsgrad des Reibrad-Umlaufgetriebes zur Folge.

### Vorteile der Erfindung

Das erfindungsgemäße Reibrad-Umlaufgetriebe mit den kennzeichnenden Merkmalen des Anspruchs 1 hat demgegenüber den Vorteil, daß das Reibrad-Umlaufgetriebe an der Schlupfgrenze betrieben werden kann. Dadurch hat das erfindungsgemäße Reibrad-Umlaufgetriebe einen geringen Verschleiß und gleichzeitig einen hohen Wirkungsgrad. Dies liegt daran, daß zur Veränderung der Anpreßkraft der Kegelräder an dem Reibrad nicht von der Drehzahl oder vom Drehmoment, sondern vom Schlupf ausgegangen wird.

Eine Möglichkeit hierzu besteht darin, daß ein Kegelrad nicht der Leistungsübertragung dient, sondern über ein Ritzel eine Welle antreibt. Durch die Erfassung und den Vergleich der Drehzahl dieser Welle mit der Drehzahl der im Kraftfluß stehenden Welle kann leicht der Schlupf erfaßt werden und dadurch die Anpreßkraft verändert werden.

Eine zweite Möglichkeit zur Erfassung des Schlupfes besteht darin, daß die Eingangsdrehzahl und die Ausgangsdrehzahl des Getriebes erfaßt werden und daß der jeweiligen Eingangsdrehzahl ein Wert zugeordnet ist, der der Ausgangsdrehzahl des Reibrad-Umlaufgetriebes ohne Schlupf entspricht. In Abhängigkeit von der Differenz der Ausgangsdrehzahl von dem Wert kann dann die Anpreßkraft verändert werden.

Weitere Vorteile und vorteilhafte Weiterbildungen dieses erfindungsgemäßen Reibrad-Umlaufgetriebes ergeben sich durch die abhängigen Ansprüche und die Beschreibung.

### Zeichnung

Zwei Ausführungsbeispiele der Erfindung sind in der Zeichnung dargestellt und in der nachfolgenden Beschreibung näher erläutert. Es zeigen
- Figur 1: eine schematische Darstellung eines ersten Ausführungsbeispiels eines erfindungsgemäßen Reibrad-Umlaufgetriebes und
- Figur 2: eine schematische Darstellung eines zweiten Ausführungsbeispiels des erfindungsgemäßen Getriebes.

### Beschreibung der Ausführungsbeispiele

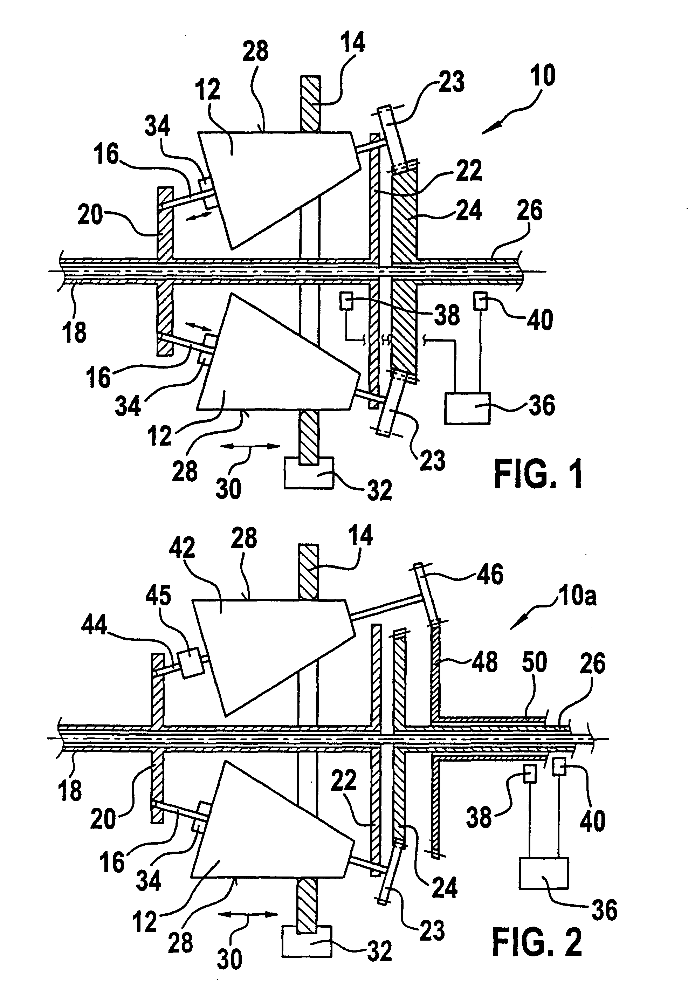

Ein in der Figur 1 dargestelltes erstes Ausführungsbeispiel eines Reibrad-Umlaufgetriebes 10 weist mehrere, vorzugsweise drei Kegelräder 12 und ein Reibrad 14 auf. Die Kegelräder 12 laufen wie die Planetenräder eines Planetengetriebes in dem Reibrad 14 um. Ihre Achsen 16 sind um den halben Öffnungswinkel der Kegelräder 12 zu einer drehbar gelagerten Getriebeeingangswelle 18 geneigt. Gelagert sind die Achsen 16 zwischen zwei Flanschen 20, 22, die drehfest mit der Getriebeeingangswelle 18 verbunden sind. Die Achsen 16 ragen über den einen Flansch 22 hinaus und weisen an ihren Enden drehfest angeordnete Ritzel 23 auf. Die Ritzel 23 treiben wie die Planetenräder eines Planetengetriebes über ein Zahnrad 24, das drehfest auf einer drehbar gelagerten Getriebeausgangswelle 26 angeordnet ist, die Getriebeausgangswelle 26 an. Das Zahnrad 24 und die Getriebeausgangswelle 26 sind fluchtend zur Getriebeeingangswelle 18 angeordnet.

Das vorzugsweise undrehbar und koaxial zur Getriebeeingangswelle 18 angeordnete Reibrad 14 ist vorzugsweise als Hohlrad ausgebildet und berührt die Kegelräder an äußeren Mantellinien 28. Damit erfüllt das Reibrad 14 zum einen die Funktion des Hohlrades eines Planetengetriebes; zum andern dient es als Regelelement zur Verstellung der Drehzahl des Reibrad-Umlaufgetriebes 10. Zur Verwendung des Reibrades 14 als Regelelement ist es in der mit einem Doppelpfeil 30 angegebenen Achsrichtung der Getriebeeingangswelle 18 über ein Stellelement 32 verschiebbar. Somit läßt sich die Ausgangsdrehzahl des Reibrad-Umlaufgetriebes bei einer festen Eingangsdrehzahl stufenlos ändern. Es ist auch möglich, daß die Ausgangsdrehzahl bei sich ändernder Eingangsdrehzahl konstant gehalten werden kann. In den Kegelrädern 12 sind mit dem Bezugszeichen 34 angedeutete Anpreßkraft-Stelleinheiten vorgesehen, die an den Berührungspunkten zwischen dem Reibrad 14 und den Kegelrädern 12 entlang der Mantellinien 28 die zur Leistungsübertragung über Reibschluß notwendige Anpreßkraft einstellen.

Für den Reibschluß zwischen den Kegelrädern 12 und dem Reibrad 14 gilt, daß das Produkt aus Normalkraft und Traktionskoeffizient größer als die Tangentialkraft sein muß, damit kein Schlupf zwischen den Kegelrädern 12 und dem Reibrad 14 entsteht. Aus Verschleiß- und Wirkungsgradgründen soll die Normalkraft aber auch nicht größer als unbedingt notwendig sein. Es ist daher vorteilhaft, sie an der Schlupfgrenze zu halten. Hierzu ist eine Erfassung des Schlupfes zwischen den Kegelrädern 12 und dem Reibrad 14 vorgesehen, wobei in Abhängigkeit vom Schlupf die Anpreßkraft veränderbar ist. Hierfür ist eine Einrichtung 36 zur Erfassung einer antriebsseitigen und einer abtriebsseitigen Drehzahl geeignet. In der Einrichtung 36 ist der antriebsseitigen Drehzahl ein Wert zugeordnet, der der abtriebsseitigen Drehzahl des Reibrad-Umlaufgetriebes 10 ohne Schlupf entspricht. Dieser Wert für die jeweilige Drehzahl läßt sich errechnen und in der Einrichtung 36 speichern. In Abhängigkeit von der Differenz der abtriebsseitigen Drehzahl von diesem Wert kann dann die Antriebskraft verändert werden.

Am ersten Ausführungsbeispiel dient die Einrichtung 36 der Erfassung der Drehzahlen der Getriebeeingangswelle 18 und der Getriebeausgangswelle 26. Wie ersichtlich ist, kann die Einrichtung 36 auf die Umlaufdrehzahl der Kegelräder 12 um eine gemeinsame Achse - in diesem Fall die Getriebeeingangswelle 18 - und über das Verhältnis der Zähnezahl eines Ritzels 23 und eines Zahnrads 24 auch die Drehzahl mindestens eines Kegelrads 12 um die eigene Achse erfassen.

Zur Erfassung der Drehzahlen sind zwei magnetfeldempfindliche Sensoren 38, 40 vorgesehen, wobei es sich vorzugsweise um induktive, Hall-, GMR- (Giant-Magnetoresistance-) oder AMR- (Anisotropic-Magnetoresistance-) Sensoren handelt. Im Betrieb des Reibrad-Umlaufgetriebes 10 erzeugen die Sensoren Wechselspannungssignale, die in die Einrichtung 36 gespeist werden. Aus der Verschiebung der Wechselspannungssignale zueinander kann dann der Schlupf ermittelt werden. An den Stellen der Getriebeeingangswelle 18 bzw. der Getriebeausgangswelle 26, an denen die Sensoren 38, 40 angeordnet sind, können an deren Umfang mehrere Magnetpole oder Zähne angeordnet sein, mit denen die Sensoren 38, 40 zusammenwirken. Die Magnetpole oder Zähne können auch auf Scheiben angeordnet sein, die auf der Getriebeeingangswelle 18 bzw. der Getriebeausgangswelle 26 befestigt sind.

Alternativ können zur Erfassung der Drehzahlen Inkrementscheiben vorgesehen sein, die auf der Getriebeeingangswelle 18 und der Getriebeausgangswelle 26 angebracht sind und die mit in diesem Fall optischen Sensoren 38, 40 abgetastet werden. Die optischen Sensoren 38, 40 erzeugen ebenfalls Wechselspannungssignale, die in die Einrichtung 36 gespeist werden. Aus der Verschiebung der Wechselspannungssignale zueinander kann auch der Schlupf ermittelt werden und die Anpreßkraft angepaßt werden.

In der Figur 2 ist als zweites Ausführungsbeispiel ein Reibrad-Umlaufgetriebe 10a dargestellt. Das Reibrad-Umlaufgetriebe 10a weist ein zusätzliches Kegelrad 42 auf. Das Kegelrad 42 verfügt über eine Anpreßkraft-Stelleinheit 44. Die Achse 45 des Kegelrads 42 ragt über den Flansch 22 hinaus und weist an ihrem Ende ein Ritzel 46 auf, das ein Zahnrad 48 antreibt. Das Zahnrad 48 schließt sich axial an das Zahnrad 24 an und ist auf einer koaxial zur Getriebeausgangswelle 26 angeordneten, drehbar gelagerten Hohlwelle 50 befestigt. Ferner sind ebenfalls Sensoren 38, 40 zur Erfassung der Drehzahlen der Hohlwelle 50 bzw. der Getriebeausgangswelle 26 vorgesehen, die ebenfalls an die Einrichtung 36 angeschlossen sind. Somit können die Drehzahlen der Getriebeausgangswelle 26 und der Hohlwelle 50 erfaßt und verglichen und in Abhängigkeit von der Differenz der Drehzahlen kann die Anpreßkraft verändert werden.

Das Prinzip der Schlupferfassung im zweiten Ausführungsbeispiel beruht zunächst darauf, daß mit dem zusätzlichen Kegelrad 42 keine Leistung übertragen wird. Dadurch dreht sich das zusätzliche Kegelrad 42 im Betrieb schlupflos. Durch die Anpreßkraft-Stelleinheit 44 muß, da keine Leistung übertragen wird, nur eine geringe Anpreßkraft ausgeübt werden. Die an der Hohlwelle 50 gemessene Drehzahl entspricht somit einer Ausgangsdrehzahl des Reibrad-Umlaufgetriebes 10a ohne Schlupf. Über den Vergleich der Drehzahlen der Hohlwelle 50 und der Getriebeausgangswelle 26 läßt sich somit wieder der Schlupf ermitteln. Durch die Verhältnisse der Zähnezahlen der Ritzel 23, 46 und der Zähnezahlen der Zahnräder 24, 48 läßt sich somit auch ohne weiteres die tatsächliche Drehzahl der Kegelräder 12 bzw. des Kegelrades 42 ermitteln.

Ist die Übersetzung der Ritzel 23 und des Zahnrads 24 gleich der Übersetzung des zusätzlichen Ritzels 46 und des zusätzlichen Zahnrads 48, so ist im schlupflosen Zustand die Differenz der Drehzahlen des Zahnrads 24 und des zusätzlichen Zahnrads 48 gleich Null. Dadurch ist eine besonders einfache Erfassung des Schlupfes möglich.

Es sei darauf hingewiesen, daß die übrigen dargestellten Bauteile die gleichen Bezugszeichen aufweisen, wie die Bauteile des ersten Ausführungsbeispiels, und daß sie den gleichen Aufbau sowie die gleiche Funktion haben.

Eine alternative Möglichkeit zur Schlupferfassung ist die, daß das Zahnrad 24 eine erste Eingangswelle und das zusätzliche Zahnrad 48 eine zweite Eingangswelle eines Umlaufgetriebes antreiben. Die Übersetzung des Umlaufgetriebes ist so ausgelegt, daß bei gleichen Drehzahlen der Eingangswellen die Drehzahl der Ausgangswelle Null ist. Die Drehzahl der Ausgangswelle ist mit einem Sensor 38 erfaßbar und in die Einrichtung 36 übertragbar. Ist der Schlupf ungleich Null, dreht sich die Ausgangswelle. Dies wird vom Sensor 38 erfaßt. D.h., in Abhängigkeit des Signals kann dann ebenfalls die Anpreßkraft verändert werden. Dadurch kann ein Sensor 40 eingespart werden.

## Patentansprüche

1. Reibrad-Umlaufgetriebe (10, 10a) mit Kegelrädern (12, 42), die an einem Reibrad (14) abrollen und die eine Abtriebswelle (26) durch ein Zahnrad (24) antreiben, wobei die Anpreßkraft zwischen den Kegelrädern (12, 42) und dem Reibrad (40) veränderlich ist, **dadurch gekennzeichnet, daß** eine Erfassung des Schlupfes zwischen den Kegelrädern (12, 42) und dem Reibrad (14) vorgesehen ist und in Abhängigkeit vom Schlupf die Anpreßkraft veränderbar ist, daß ein zusätzliches Kegelrad (42) vorgesehen ist, an dem ein zusätzliches Ritzel (46) angeordnet ist, das mit einem zusätzlichen Zahnrad (48) kämmt, das eine Einrichtung (36) zur Erfassung und zum Vergleich der Drehzahlen des Zahnrads (24) und des zusätzlichen Zahnrads (48) vorgesehen ist und daß in Abhängigkeit von der Differenz der Drehzahlen die Anpreßkraft veränderbar ist.

2. Reibrad-Umlaufgetriebe (10a) nach Anspruch 1, **dadurch gekennzeichnet, daß** die Übersetzung des Zahnrads (24) und des das Zahnrad (24) antreibende Ritzels (23) gleich der Übersetzung des zusätzlichen Zahnrads (48) und des zusätzlichen Ritzels (46) ist, so daß im schlupflosen Zustand die Differenz der Drehzahlen des Zahnrads (24) und des zusätzlichen Zahnrads (48) Null ist.

3. Reibrad-Umlaufgetriebe (10a) nach Anspruch 2, **dadurch gekennzeichnet, daß** das Zahnrad (24) eine erste Eingangswelle und das zusätzliche Zahnrad (48) eine zweite Eingangswelle eines Umlaufgetriebes antreibt, daß die Übersetzung des Umlaufgetriebes so ausgelegt ist, daß bei gleichen Drehzahlen der Eingangswellen die Drehzahl der Ausgangswellen Null ist, daß die Drehzahl der Ausgangswellen mit einem Sensor erfaßbar und in die Einrichtung (36) übertragbar ist und daß in Abhängigkeit des Signals die Anpreßkraft veränderbar ist.

4. Reibrad-Umlaufgetriebe nach einem der Ansprüche 1 bis 3, **dadurch gekennzeichnet, daß** zur Erfassung der Drehzahlen Scheiben vorgesehen sind, an deren Umfang mehrere Magnetpole oder Zähne angeordnet sind, die von zwei magnetfeldempfindlichen Sensoren (38, 40) vorzugsweise induktiven, Hall-, GMR- oder AMR-Sensoren abgetastet werden, die Wechselspannungssignale erzeugen, die in die Einrichtung (36) gespeist werden und daß aus der Verschiebung der Wechselspannungssignale der Schlupf ermittelbar ist.

5. Reibrad-Umlaufgetriebe (10, 10a) nach einem der Ansprüche 1 bis 3, **dadurch gekennzeichnet, daß** zur Erfassung der Drehzahlen Inkrementscheiben vorgesehen sind, die mit optischen Sensoren abgetastet werden, die Wechselspannungssignale erzeugen, die in die Einrichtung (36) gespeist werden und daß aus der Verschiebung der Wechselspannungssignale der Schlupf ermittelbar ist.

## Claims

1. Friction-wheel planetary gear unit (10, 10a) with bevel wheels (12, 42) which roll on a friction wheel (14) and which drive an output shaft (26) by means of a gearwheel (24), the pressure force between the bevel wheels (12, 42) and the friction wheel (40) being variable, **characterized in that** detection of the slip between the bevel wheels (12, 42) and the friction wheel (14) is provided and the pressure force can be varied as a function of the slip, **in that** an additional bevel wheel (42) is provided, on which is arranged an additional pinion (46) which meshes with an additional gearwheel (48), **in that** a device (36) for the detection and comparison of the rotational speeds of the gearwheel (24) and of the additional gearwheel (48) is provided, and **in that** the pressure force can be varied as a function of the difference between the rotational speeds.

2. Friction-wheel planetary gear unit (10a) according to Claim 1, **characterized in that** the transmission ratio of the gearwheel (24) and of the pinion (23) driving the gearwheel (24) is equal to the transmission ratio of the additional gearwheel (48) and of the additional pinion (46), so that, in the non-slip state, the difference between the rotational speeds of the gearwheel (24) and of the additional gearwheel (48) is zero.

3. Friction-wheel planetary gear unit (10a) according to Claim 2, **characterized in that** the gearwheel (24) drives a first input shaft and the additional gearwheel (48) a second input shaft of a planetary gear unit, **in that** the transmission ratio of the planetary gear unit is designed in such a way that, with the rotational speeds of the input shafts being identical, the rotational speed of the output shafts is zero, **in that** the rotational speed of the output shafts can be detected by means of a sensor and can be transmitted into the device (36), and **in that** the pressure force can be varied as a function of the signal.

4. Friction-wheel planetary gear unit according to one of Claims 1 to 3, **characterized in that**, to detect the rotational speeds, discs are provided, on the circumference of which are arranged a plurality of magnetic poles or teeth which are sensed by two sensors (38, 40) sensitive to a magnetic field, preferably inductive, Hall, GMR or AMR sensors, which generate alternating-voltage signals which are fed into the device (36), and **in that** the slip can be determined from the shift of the alternating-voltage signals.

5. Friction-wheel planetary gear unit (10, 10a) according to one of Claims 1 to 3, **characterized in that**, to detect the rotational speeds, incremental discs are provided, which are sensed by optical sensors which generate alternating-voltage signals which are fed into the device (36), and **in that** the slip can be determined from the shift of the alternating-voltage signals.

## Revendications

1. Transmission planétaire à roue de friction (10, 10a) comportant des roues coniques (12, 42) roulant sur une roue de friction (14) et entraînant un arbre de sortie (26) par une roue dentée (24), la force d'application entre les roues coniques (12, 42) et la roue de friction (40) étant variable,
**caractérisée en ce qu'**
on saisit le patinage entre les roues coniques (12, 42) et la roue de friction (14) et en fonction du patinage on modifie la force d'application, une roue conique (42) supplémentaire étant prévue portant un pignon supplémentaire (46) engrenant avec une roue dentée supplémentaire (48), une installation (36) étant prévue pour saisir et comparer la vitesse de rotation de la roue dentée (24) et celle de la roue dentée supplémentaire (48) et, en fonction de la différence des vitesses de rotation, on modifie la force d'application.

2. Transmission planétaire à roue de friction (10a) selon la revendication 1,
**caractérisée en ce que**
la démultiplication de la roue dentée (24) et celle du pignon (23) entraînant la roue dentée (24) est égale à la démultiplication de la roue dentée supplémentaire (48) et du pignon supplémentaire (46) de façon qu'en l'absence de patinage, la différence de la vitesse de rotation de la roue dentée (24) et de celle de la roue dentée supplémentaire (48) est égale à zéro.

3. Transmission planétaire à roue de friction (10a) selon la revendication 2,
**caractérisée en ce que**
la roue dentée (24) entraîne un premier arbre d'entrée et la roue dentée supplémentaire (48) un second arbre d'entrée d'une transmission planétaire,
la démultiplication de la transmission planétaire étant conçue pour qu'à une même vitesse de rotation des arbres d'entrée, la vitesse de rotation des arbres de sortie est égale à zéro,
la vitesse de rotation des arbres de sortie étant détectée par un capteur pour être transmise à l'installation (36) et en fonction du signal on modifie la force d'application.

4. Transmission planétaire à roue de friction selon l'une quelconque des revendications 1 à 3,
**caractérisée en ce que**
pour la détection de la vitesse de rotation on a des disques dont la périphérie comporte plusieurs pôles magnétiques ou des dents, détectés par deux capteurs (38, 40) sensibles au champ magnétique, de préférence des capteurs inductifs, des capteurs Hall, des capteurs GMR ou des capteurs AMR, ces capteurs générant des signaux de tension alternative injectés dans l'installation (36), et à partir du décalage des signaux de tension alternative on détermine le patinage.

5. Transmission planétaire à roue de friction (10, 10a) selon l'une quelconque des revendications 1 à 3,
**caractérisée en ce que**
pour saisir les vitesses de rotation on a des disques incrémentaux détectés par des capteurs optiques générant des signaux de tension alternative fournis à l'installation (36) et à partir du décalage des signaux de tension alternative on détermine le patinage.
